# EUROPÄISCHE PATENTSCHRIFT

(11) **EP 2 502 487 B1**
(45) Veröffentlichungstag und Bekanntmachung des Hinweises auf die Patenterteilung: **29.05.2013**
(21) Anmeldenummer: 11002511.1
(22) Anmeldetag: 25.03.2011
(51) Int. Cl.: A01G 9/00

(54) **Verfahren zur Aufzucht mehrerer nach Art oder Sorte unterschiedlicher Jungpflanzen zu einer als Einheit handhabbaren Jungpflanzengruppe**
Method for breeding multiple seedlings of different types or kinds as a group of seedlings which can be held as a unit
Procédé de culture de plusieurs jeunes pousses de type et genre différents en un groupe de jeunes pousses pouvant être manipulées en tant qu'unité

(43) Veröffentlichungstag der Anmeldung: 26.09.2012
(73) Patentinhaber: Selecta Klemm GmbH & Co. KG, 70378 Stuttgart (DE)
(72) Erfinder: Klemm, Nils, 70378 Stuttgart (DE); Sander, Ulrich, Dr., 70378 Stuttgart (DE); de Bresser, Antonius, 5103 EL Dongen (NL); Schimmelpfeng, Dirk, 71686 Remseck (DE); Rinnergschwentner, Andreas, 76327 Pfinztal-Sollingen (DE)
(74) Vertreter: Beyer, Andreas

(56) Entgegenhaltungen:
- US-A1- 2003 046 866
- US-A1- 2007 227 066
- US-B2- 7 891 134

## Beschreibung

Die Erfindung betrifft ein Verfahren zur Aufzucht mehrerer nach Art oder Sorte unterschiedlicher Jungpflanzen zu einer als Einheit handhabbaren Jungpflanzengruppe.

In jüngerer Zeit haben sogenannte gemischte Töpfe, Container und Ampeln stark an Marktbedeutung gewonnen, d.h. Kulturgefäße für den Endverbraucher, die mit verschiedenen Sorten einer Pflanzenart oder auch mit verschiedenen Pflanzenarten bepflanzt sind. Typischerweise werden diese Produkte durch ein getrenntes Heranziehen und anschließendes Zusammenpflanzen einzelner Jungpflanzen der verschiedenen Sorten oder Arten in einem Kulturgefäß (Topf, Container, Ampel usw.) hergestellt. Die Jungpflanzen werden üblicherweise durch Aussaat oder durch Abstecken eines unbewurzelten Stecklings in einem zur Heranzucht von Jungpflanzen geeigneten Vermehrungstopf kultiviert, der beispielsweise ein Vliestopf (auch als paper pot bezeichnet), ein sogenannter Jiffypot^{®} oder ein sogenannter Preforma^{®}-Topf sein kann. Ein Vliestopf ist ein im Wesentlichen hohlzylindrischer Behälter aus einem vliesartigen Papiermaterial, der das zur Aufzucht der Jungpflanze verwendete Substratmaterial aufnimmt. Ein Jiffypot^{®} besteht aus getrocknetem, gepresstem Torf, der mit einem biologisch abbaubaren Netz umgeben ist. Er quillt bei Zugabe von Wasser auf und bekommt so seine eigentliche Form. Ein Preforma^{®}-Topf ist ein aus dem Substratmaterial, beispielsweise Torf, und einem organischen Klebstoff gepresstes Gebilde, welches unmittelbar den Samen oder Steckling aufnehmen kann. Vliestöpfe, Jiffypot^{®}-Töpfe oder Preforma^{®}-Töpfe haben selbst keine ausreichende Stabilität und müssen daher jeweils in einen Anzuchtbehälter gesteckt werden, der ein sicheres Handling der mit Samen oder Stecklingen versehenen Vliestöpfe, Jiffypot^{®}-Töpfe oder Preforma^{®}-Töpfe ermöglicht und es gestattet, dem Substratmaterial das zur Aufzucht notwendige Wasser und gegebenenfalls Nährflüssigkeiten etc. zuzuführen. Eine Anzuchtplatte, auch als tray bezeichnet, enthält eine Vielzahl solcher Anzuchtbehälter, auch Zellen genannt, und ermöglicht ein effizientes Handling aller in den Anzuchtbehältern enthaltener Vermehrungstöpfe.

Zur Herstellung gemischter Töpfe, Container und Ampeln müssen gewünschte, wie zuvor beschrieben aufgezogene unterschiedliche Jungpflanzen in dem zum Verkauf bestimmten Kulturgefäß, z.B. einen Topf, einen Container oder eine Ampel, zusammengepflanzt werden, was üblicherweise durch einen Fertigwareproduzenten geschieht. Das Einpflanzen der gewünschten, unterschiedlichen Jungpflanzen in jeweils einen Topf oder ähnliches stellt ersichtlich einen beträchtlichen logistischen und organisatorischen Aufwand dar. Auch besteht hierbei ein erhebliches Risiko, dass nicht immer die richtigen Jungpflanzen in einen Topf gepflanzt werden.

Alternativ ist es aus der US 7,891,134 B2 bekannt, Stecklinge unterschiedlicher Sorten und/oder Arten in einem einzigen Vermehrungstopf gemeinsam zu bewurzeln. Der wesentliche Vorteil dieses Verfahrens besteht in einer deutlichen Arbeitsersparnis beim Fertigwareproduzenten und in der Vermeidung von Fehlern beim zuvor beschriebenen, späteren Zusammenpflanzen gewünschter Jungpflanzen. Nachteilig ist jedoch, dass nur Stecklinge von Sorten oder Arten gemeinsam bewurzelt werden können, die während der Bewurzelung zumindest annähernd gleiche Kulturansprüche hinsichtlich Temperatur, Wasserzufuhr, Substratmaterial etc. haben und die darüber hinaus gleiche oder jedenfalls ähnliche Wuchseigenschaften aufweisen.

Der Erfindung liegt die Aufgabe zugrunde, ein Verfahren anzugeben, das es gestattet, auch unterschiedliche Pflanzensorten und/oder Pflanzenarten, insbesondere auch Pflanzen mit unterschiedlichen Kulturansprüchen, auf arbeitssparende Weise zu einer Jungpflanzengruppe heranzuziehen, die als Einheit handhabbar ist.

Diese Aufgabe ist erfindungsgemäß mit einem Verfahren zur Aufzucht mehrerer nach Art oder Sorte unterschiedlicher Jungpflanzen zu einer als Einheit handhabbaren Jungpflanzengruppe gelöst, welches folgende Schritte aufweist:
- Bereitstellen mehrerer jeweils ein Substrat enthaltender Vermehrungstöpfe, die ein seitliches Herauswachsen sich in einem Vermehrungstopf bildender Wurzeln gestatten,
- Bestücken wenigstens eines Anzuchtbehälters mit den mehreren Vermehrungstöpfen derart, dass die in jedem Anzuchtbehälter angeordneten Vermehrungstöpfe an zumindest einem Teil ihrer seitlichen Umfangsfläche Kontakt miteinander haben oder gegeneinander gedrückt werden,
- Einbringen eines oder mehrerer Stecklinge oder Samen jeweils einer Sorte und/oder Art in jeden Vermehrungstopf, und
- Ausbilden lassen von Wurzeln in den Vermehrungstöpfen jedes Anzuchtbehälters, bis seitlich aus den Vermehrungstöpfen austretende Wurzeln ein Wurzelgeflecht gebildet haben, das die Vermehrungstöpfe in einem Anzuchtbehälter zu einem Vermehrungstopfcluster verbindet und zusammenhält.

Die oben genannte Aufgabe ist auch gelöst mit einem Verfahren zur Aufzucht mehrerer nach Art oder Sorte unterschiedlicher Jungpflanzen zu einer als Einheit handhabbaren Jungpflanzengruppe, welches folgende Schritte aufweist:
- Bereitstellen mehrerer jeweils ein Substrat enthaltender Vermehrungstöpfe, die ein seitliches Herauswachsen sich in einem Vermehrungstopf bildender Wurzeln gestatten,
- Einbringen eines oder mehrerer Stecklinge oder Samen jeweils einer Sorte und/oder Art in jeden Vermehrungstopf,
- Ausbilden lassen von Wurzeln in dem Substrat jedes Vermehrungstopfes,
- Bestücken wenigstens eines Anzuchtbehälters mit den mehreren Vermehrungstöpfen derart, dass die in jedem Anzuchtbehälter angeordneten Vermehrungstöpfe an zumindest einem Teil ihrer seitlichen Umfangsfläche Kontakt miteinander haben oder gegeneinander gedrückt werden, und
- Ausbilden lassen von Wurzeln in den Vermehrungstöpfen jedes Anzuchtbehälters, bis seitlich aus den Vermehrungstöpfen austretende Wurzeln ein Wurzelgeflecht gebildet haben, das die Vermehrungstöpfe in einem Anzuchtbehälter zu einem Vermehrungstopfcluster verbindet und zusammenhält.

Beiden Verfahren ist demnach gemeinsam, dass eine gewünschte Anzahl von Vermehrungstöpfen bereitgestellt werden, die ein seitliches Herauswachsen von sich im Verlauf des Aufzuchtprozesses der Jungpflanzen bildender Wurzeln aus dem Vermehrungstopf erlauben. Die Formgebung der Vermehrungstöpfe ist nicht entscheidend, jedoch haben vorzugsweise alle verwendeten Vermehrungstöpfe die gleiche Form. Alle bereitgestellten Vermehrungstöpfe enthalten ein Substrat, welches zur Aufzucht der Jungpflanzen geeignet ist.

Gemäß der ersten Verfahrensalternative werden die bereitgestellten, jeweils ein Substrat enthaltenden Vermehrungstöpfe dann in einem oder mehreren Anzuchtbehältern so angeordnet, dass sich in jedem Anzuchtbehälter wenigstens zwei Vermehrungstöpfe, vorzugsweise zwei bis sechs Vermehrungstöpfe nebeneinander befinden (also nicht gestapelt, d.h. nicht aufeinander). Dabei stehen alle in einem Anzuchtbehälter befindlichen Vermehrungstöpfe an zumindest einem Teil ihrer seitlichen Umfangsfläche in Kontakt miteinander. Der gegenseitige seitliche Kontakt der Vermehrungstöpfe wird normalerweise, d.h. bei zylindrischen Vermehrungstöpfen mit runder Außenwand, die Gestalt einer vertikalen Linie oder eines vertikalen Streifens haben, kann aber in Abhängigkeit der äußeren Gestalt der zum Einsatz kommenden Vermehrungstöpfe auch flächig sein, etwa bei im Querschnitt rechteckigen oder quadratischen Vermehrungstöpfen. Auch braucht der gegenseitige Kontakt der Vermehrungstöpfe sich nicht über deren gesamte Höhe zu erstrecken, wichtig ist nur, dass das Ausmaß des gegenseitigen Kontakts dazu ausreicht, dass genügend Wurzeln seitlich aus einem Vermehrungstopf in einen benachbarten Vermehrungstopf wachsen können, um die Vermehrungstöpfe zu einer Einheit zu verbinden. Die Anordnung der sich jeweils in einem Anzuchtbehälter befindenden Vermehrungstöpfe kann so sein, dass sie in seitlicher Richtung etwas gegeneinander gedrückt werden. Dies kann z.B. durch eine entsprechende Gestaltung des Anzuchtbehälters mittels Stützrippen oder ähnlichem erreicht werden. Die Kraft, mit der die Vermehrungstöpfe in einem Anzuchtbehälter seitlich gegeneinander gedrückt werden, kann zu einer leichten Verformung der Vermehrungstöpfe an denjenigen Stellen führen, an denen ihre seitlichen Umfangsflächen Kontakt miteinander haben.

Sodann werden in jeden Vermehrungstopf ein oder mehrere Stecklinge oder Samen jeweils einer Sorte oder Art eingebracht, wobei die Stecklinge unbewurzelt, kallusiert oder bewurzelt sein können. Mit anderen Worten, in einen Vermehrungstopf kommen jeweils nur Stecklinge oder Samen einer Sorte und/oder Art, jedoch werden in die verschiedenen Vermehrungstöpfe, die sich jeweils in einem Anzuchtbehälter befinden, unterschiedliche Sorten oder Arten eingebracht, damit sich später eine Jungpflanzengruppe aus verschiedenen Arten und/oder Sorten ergibt. Sowohl das Bestücken der Anzuchtbehälter mit den mehreren Vermehrungstöpfen als auch das Einbringen der Stecklinge oder Samen in jeden Vermehrungstopf kann manuell oder automatisiert durchgeführt werden.

Die Stecklinge oder Samen in den Vermehrungstöpfen werden anschließend in üblicher Weise kultiviert, d.h. ihnen werden das zur Aufzucht notwendige Wasser und gegebenenfalls erforderliche Nährstoffe und ähnliches zugeführt. Im Zuge dieses Aufzuchtvorgangs bilden sich in den Vermehrungstöpfen jedes Anzuchtbehälters Wurzeln aus oder schon vorhandene Wurzeln wachsen weiter und man lässt erfindungsgemäß dieses Ausbilden von Wurzeln solange fortfahren, bis seitlich aus den Vermehrungstöpfen austretende Wurzeln ein Wurzelgeflecht gebildet haben, das die sich in einem Anzuchtbehälter befindlichen Vermehrungstöpfe zu einem Vermehrungstopfcluster verbindet und zusammenhält. Dabei ist es nicht erforderlich, dass alle in einem Anzuchtbehälter befindlichen Arten oder Sorten eine gleich starke Wurzelbildung aufweisen. Es ist also nicht notwendig, dass Wurzeln aus allen in einem Anzuchtbehälter befindlichen Vermehrungstöpfen seitlich herauswachsen, sondern es reicht beispielsweise aus, wenn neben einem Vermehrungstopf, in dem sich eine Sorte oder Art mit schwächerer Wurzelbildung befindet, ein Vermehrungstopf angeordnet ist, in dem sich eine Sorte oder Art mit stärkerer Wurzelbildungsfähigkeit befindet. Es können also in einem Anzuchtbehälter gezielt Sorten oder Arten mit starker Wurzelbildung kombiniert werden mit solchen Sorten oder Arten, deren Wurzelbildung schwächer ausgeprägt ist. Die Sorten oder Arten mit starker Wurzelbildung werden in die daneben befindlichen Vermehrungstöpfe der Sorten oder Arten mit schwächerer Wurzelbildung einwurzeln und so die Verbindung der Vermehrungstöpfe zu einem Cluster sicherstellen. Bei Sorten oder Arten mit etwa gleich starker Wurzelbildungsfähigkeit werden die seitlich aus dem Vermehrungstöpfen herauswachsenden Wurzeln gegenseitig in die jeweils daneben angeordneten Vermehrungstöpfe einwurzeln und bilden somit ebenso ein Wurzelgeflecht, welches die Vermehrungstöpfe in einem Anzuchtbehälter nicht nur verbindet, sondern so zusammenhält, dass dieser Vermehrungstopfcluster als eine Einheit aus dem Anzuchtbehälter herausgenommen werden kann.

Die zuvor beschriebene erste Verfahrensalternative bietet sich für Pflanzenarten oder -sorten an, deren Kulturansprüche sich während der Aufzucht nicht zu sehr voneinander unterscheiden, d.h. die auch als Stecklinge oder Sämlinge während der Aufzucht in etwa gleiche Anforderungen an die Umgebungstemperatur, die zugeführte Wassermenge etc. haben. Ist dies nicht der Fall, kommt vorzugsweise die zweite Verfahrensalternative zum Einsatz.

Gemäß der zweiten Verfahrensalternative werden die bereitgestellten, jeweils ein Substrat enthaltenden Vermehrungstöpfe vorerst nicht in den oder die Anzuchtbehälter gesteckt, sondern es werden zunächst ein oder mehrere Stecklinge oder Samen jeweils einer Sorte oder Art in jeden Vermehrungstopf eingebracht, wobei die Stecklinge wiederum bewurzelt oder unbewurzelt sein können. Sodann werden diese Vermehrungstöpfe eine Zeit lang getrennt kultiviert, und zwar solange, bis sich in jedem Vermehrungstopf eine ausreichende Menge von Wurzeln gebildet haben. Beispielsweise haben durch Stecklinge vermehrte Arten und Sorten häufig sehr unterschiedliche allgemeine Kulturansprüche während der Bewurzelungsphase. Verholzende Gewächse, z.B. Rosmarin, benötigen deutlich mehr Zeit, bis ihre Stecklinge Wurzeln bilden und haben darüber hinaus in der Bewurzelungsphase ganz andere allgemeine Kulturansprüche als krautige Pflanzen. Die Zeitspanne zur Bildung von Wurzeln reicht je nach Art von wenigen Tagen bis zu mehreren Wochen. Neben der Zeit für die Bewurzelung variiert vor allem auch der Wasserbedarf und Temperaturanspruch während der Bewurzelung. Manche Arten können unter sogenanntem Sprühnebel vermehrt werden, während andere Arten auf häufige Wasserzugabe mit einer erhöhten Anfälligkeit für Pilzinfektionen reagieren und daher unbedingt ohne Sprühnebel, aber dennoch bei hoher Luftfeuchtigkeit kultiviert werden müssen. Schließlich können durch eine in der Bewurzelungsphase getrennte Kultivierung der Vermehrungstöpfe auch solche Stecklinge oder Samen enthaltende Vermehrungstöpfe ausgesondert werden, in denen es zu keiner Bewurzelung gekommen ist.

Nach der Bildung der ersten Wurzeln sind Jungpflanzen in der Lage, ihren Wasserhaushalt über die Wurzel zu regulieren. Kulturansprüche unterschiedlicher Arten gleichen sich dann erheblich an und es wird eine gemeinsame Kultur, d.h. eine gemeinsame weitere Aufzucht unterschiedlicher Arten einfacher möglich. Gemäß der zweiten Verfahrensalternative werden deshalb der oder die Anzuchtbehälter erst dann mit den mehreren Vermehrungstöpfen bestückt, wenn sich in jedem Vermehrungstopf eine ausreichende Anzahl von Wurzeln gebildet hat. Die Anordnung der Vermehrungstöpfe in einem Anzuchtbehälter entspricht dabei der ersten Verfahrensalternative, d.h. die in einem Anzuchtbehälter befindlichen Vermehrungstöpfe stehen an zumindest einem Teil ihrer seitlichen Umfangsfläche in Kontakt miteinander oder werden sogar leicht gegeneinander gedrückt. Auch der sich an das Bestücken der Anzuchtbehälter mit Vermehrungstöpfen anschließende Schritt entspricht der ersten Verfahrensalternative, d.h. die in einem Anzuchtbehälter befindlichen Vermehrungstöpfe werden gemeinsam solange weiter kultiviert, bis seitlich aus den Vermehrungstöpfen austretende Wurzeln ein Wurzelgeflecht gebildet haben, das die Vermehrungstöpfe in dem Anzuchtbehälter zu einem Vermehrungstopfcluster verbindet und diesen Cluster zusammenhält.

Unabhängig davon, ob die erste oder die zweite Verfahrensalternative angewendet wird, hat das erfindungsgemäße Verfahren den Vorteil, dass sich in einem Vermehrungstopf immer nur eine Sorte oder Art befindet. Das in einem Vermehrungstopf jeweils enthaltene Substrat kann deshalb auf die jeweilige Sorte oder Art abgestimmt sein. Beispielsweise kann das Substrat je nach Sorte oder Art unterschiedliche physikalische Eigenschaften haben, etwa eine auf eine Sorte oder Art abgestimmte Textur und/oder ein auf diese Sorte oder Art abgestimmtes Wasserhaltevermögen (sogenanntes Wasserpotential), und/oder kann mit einem auf die Sorte oder Art abgestimmten Dünger versehen sein. Ferner kann das Substrat einen auf die jeweilige Sorte oder Art abgestimmten pH-Wert haben. Auch kann das Substrat in Abhängigkeit der in einem Vermehrungstopf befindlichen Sorte oder Art einen Wuchshemmstoff enthalten, wobei gegebenenfalls die Menge des Wuchshemmstoffes je nach der in dem zugehörigen Vermehrungstopf befindlichen Sorte oder Art unterschiedlich sein kann. Schließlich kann das Substrat in Abhängigkeit der in einem Vermehrungstopf befindlichen Sorte oder Art ein Pflanzenschutzmittel enthalten, etwa ein Fungizid. Auch kann das Substrat mit Pflanzenhormonen zur Förderung der Wurzelbildung und zur Hemmung des Streckungswachstums des Sprosses behandelt sein.

Aus den vorstehenden Erläuterungen ist ersichtlich, dass durch eine geeignete Auswahl und/oder Vorbehandlung des in einem Vermehrungstopf befindlichen Substrats das Substrat nicht nur optimal auf die in einem Vermehrungstopf befindliche Sorte oder Art abgestimmt werden kann, sondern dass es darüber hinaus möglich ist, die Wuchseigenschaften der unterschiedlichen Sorten und/oder Arten von Pflanzen, die sich in den Vermehrungstöpfen eines Anzuchtbehälters befinden, aneinander anzugleichen, um dadurch eine gemeinsame Aufzucht zu ermöglichen und ein harmonisches Zusammenwachsen der unterschiedlichen Jungpflanzen zu erreichen. Das Verfahren gemäß der vorliegenden Erfindung ermöglicht es also, sehr unterschiedliche Sorten und/oder Arten so zu kultivieren, dass sie als eine Jungpflanzeneinheit versendet und getopft werden können und dabei trotzdem unterschiedlichsten Kulturansprüchen während der Aufzucht der Jungpflanzen Rechnung getragen werden kann.

Die zweite Verfahrensalternative bietet darüber hinaus den Vorteil, dass sehr unterschiedlichen Kulturansprüchen bestimmter Pflanzenarten und Pflanzensorten während der Bewurzelungsphase noch besser Rechnung getragen werden kann. Bestimmte Arten und Sorten können überhaupt erst durch die separate Vorkultur in einen Zustand versetzt werden, der es anschließend erlaubt, sie mit anderen Arten und/oder Sorten gemeinsam weiter zu kultivieren.

Die zweite Verfahrensalternative ermöglicht es auch, stecklingsvermehrte Arten zusammen mit in vitro vermehrten Arten zu einem Jungpflanzencluster zusammenzufügen. Hierzu müssen in vitro Pflanzen zunächst unter geeigneten Bedingungen vorsichtig an ein Gewächshausklima angepasst werden. Diesen Vorgang bezeichnet man als Abhärtung. Die in vitro Pflanzen bilden in dieser Phase Wurzeln, die in den Vermehrungstopf einwachsen. Die Abhärtung wird häufig in kleinen Folienzelten mit sehr hoher Luftfeuchtigkeit durchgeführt. Nach der erfolgten Abhärtung können in vitro Pflanzen normal weiter kultiviert werden, z.B. zusammen mit stecklingsvermehrten Arten.

Die zweite Verfahrensalternative kann auch dazu verwendet werden, vegetativ durch Stecklinge vermehrte Arten mit generativ durch Samen vermehrte Arten zusammen weiter zu kultivieren. Jedoch sind die erforderlichen Kulturbedingungen nach einer Aussaat sehr spezifisch und grundlegend verschieden von den Kulturbedingungen, die ein unbewurzelter Steckling während der Bewurzelungsphase braucht. Deshalb werden unbewurzelte Stecklinge und ausgesäte Samen zunächst getrennt vorkultiviert, wobei sich insbesondere die dazu erforderliche Luftfeuchtigkeit und die Feuchtigkeit des Substrats deutlich unterscheiden. Nach erfolgter Keimung und Bildung einer ausreichenden Anzahl von Wurzeln haben Sämlinge jedoch Kulturansprüche, die den Kulturansprüchen bewurzelter Stecklinge ähnlich sind. Deshalb können im Anschluss an die genannte, getrennte Vorkultur bewurzelte Stecklinge und Sämlinge zusammen weiter kultiviert werden, um einen gemischten Jungpflanzencluster zu bilden. Wie die bewurzelten Stecklinge wachsen auch die Sämlinge mit den anderen Pflanzen eines Clusters über ihre Wurzeln zusammen.

Vorzugsweise wird das erfindungsgemäße Verfahren unter Verwendung sogenannter Anzuchtplatten durchgeführt, auf denen jeweils eine Vielzahl von Anzuchtbehältern angeordnet sind, üblicherweise in Zeilenform. Jeder Anzuchtbehälter kann dabei Platz für zwei, drei, vier oder fünf Vermehrungstöpfe bieten. Beispielsweise können bei einem Anzuchtbehälter für drei Vermehrungstöpfe letztere näherungsweise in der Form eines dreiblättrigen Kleeblatts angeordnet sein, bei vier Vermehrungstöpfen können diese in Form eines Vierecks angeordnet sein, bei fünf Vermehrungstöpfen können diese so angeordnet sein, dass ein mittlerer Vermehrungstopf von den übrigen vier Vermehrungstöpfen umgeben ist, usw. Es ist auch möglich, mehr als fünf Vermehrungstöpfe in einem Anzuchtbehälter anzuordnen, denkbar sind beispielsweise auch sechs oder sieben Vermehrungstöpfe, jedoch wird es mit größer werdender Anzahl von Vermehrungstöpfen abhängig von deren Anordnung im Anzuchtbehälter unter Umständen schwieriger, den gewünschten seitlichen Kontakt der Vermehrungstöpfe sicherzustellen.

Vorzugsweise umfasst das erfindungsgemäße Verfahren den weiteren Schritt des Entnehmens des Vermehrungstopfclusters aus jedem Anzuchtbehälter und des Pflanzens des bzw. der Vermehrungstopfcluster in jeweils ein Kulturgefäß für Fertigware, z.B. in einen Topf, einen Container oder eine Ampel.

## Patentansprüche

1. Verfahren zur Aufzucht mehrerer nach Art oder Sorte unterschiedlicher Jungpflanzen zu einer als Einheit handhabbaren Jungpflanzengruppe, **gekennzeichnet durch** die folgenden Schritte:
- Bereitstellen mehrerer jeweils ein Substrat enthaltender Vermehrungstöpfe, die ein seitliches Herauswachsen sich in einem Vermehrungstopf bildender Wurzeln gestatten,
- Bestücken wenigstens eines Anzuchtbehälters mit den mehreren Vermehrungstöpfen derart, dass die in jedem Anzuchtbehälter angeordneten Vermehrungstöpfe an zumindest einem Teil ihrer seitlichen Umfangsfläche Kontakt miteinander haben oder gegeneinander gedrückt werden,
- Einbringen eines oder mehrerer Stecklinge oder Samen jeweils einer Sorte und/oder Art in jeden Vermehrungstopf, und
- Ausbilden lassen von Wurzeln in den Vermehrungstöpfen jedes Anzuchtbehälters, bis seitlich aus den Vermehrungstöpfen austretende Wurzeln ein Wurzelgeflecht gebildet haben, das die Vermehrungstöpfe in einem Anzuchtbehälter zu einem Vermehrungstopfcluster verbindet und zusammenhält.

2. Verfahren zur Aufzucht mehrerer nach Art oder Sorte unterschiedlicher Jungpflanzen zu einer als Einheit handhabbaren Jungpflanzengruppe, **gekennzeichnet durch** die folgenden Schritte:
- Bereitstellen mehrerer jeweils ein Substrat enthaltender Vermehrungstöpfe, die ein seitliches Herauswachsen sich in einem Vermehrungstopf bildender Wurzeln gestatten,
- Einbringen eines oder mehrerer Stecklinge oder Samen jeweils einer Sorte und/oder Art in jeden Vermehrungstopf,
- Ausbilden lassen von Wurzeln in dem Substrat jedes Vermehrungstopfes,
- Bestücken wenigstens eines Anzuchtbehälters mit den mehreren Vermehrungstöpfen derart, dass die in jedem Anzuchtbehälter angeordneten Vermehrungstöpfe an zumindest einem Teil ihrer seitlichen Umfangsfläche Kontakt miteinander haben oder gegeneinander gedrückt werden, und
- Ausbilden lassen von Wurzeln in den Vermehrungstöpfen jedes Anzuchtbehälters, bis seitlich aus den Vermehrungstöpfen austretende Wurzeln ein Wurzelgeflecht gebildet haben, das die Vermehrungstöpfe in einem Anzuchtbehälter zu einem Vermehrungstopfcluster verbindet und zusammenhält.

3. Verfahren nach Anspruch 1 oder 2,
**dadurch gekennzeichnet, dass** das in den Vermehrungstöpfen enthaltene Substrat auf die jeweilige Sorte oder Art abgestimmt ist.

4. Verfahren nach Anspruch 3,
**dadurch gekennzeichnet, dass** das Substrat ein auf die jeweilige Sorte oder Art abgestimmtes Wasserhaltevermögen hat.

5. Verfahren nach Anspruch 3 oder 4,
**dadurch gekennzeichnet, dass** das Substrat einen auf die jeweilige Sorte oder Art abgestimmten pH-Wert hat.

6. Verfahren nach einem der Ansprüche 3 bis 5,
**dadurch gekennzeichnet, dass** das Substrat in Abhängigkeit der in einem Vermehrungstopf befindlichen Sorte oder Art einen Wuchshemmstoff enthält.

7. Verfahren nach einem der Ansprüche 3 bis 6,
**dadurch gekennzeichnet, dass** das Substrat in Abhängigkeit der in einem Vermehrungstopf befindlichen Sorte oder Art ein Pflanzenschutzmittel enthält, etwa ein Fungizid.

8. Verfahren nach einem der vorhergehenden Ansprüche,
**dadurch gekennzeichnet, dass** eine Vielzahl von Anzuchtbehältern auf einer Anzuchtplatte angeordnet ist.

9. Verfahren nach einem der vorhergehenden Ansprüche,
**dadurch gekennzeichnet, dass** die Vermehrungstöpfe ausgewählt sind aus einer Gruppe enthaltend Vliestöpfe, Jiffypot^{®}-Töpfe und Preforma^{®}-Töpfe.

10. Verfahren nach einem der vorhergehenden Ansprüche,
**gekennzeichnet durch** den weiteren Schritt des Entnehmens des Vermehrungstopfclusters aus jedem Anzuchtbehälter und des Umtopfens des bzw. der Vermehrungstopfcluster in jeweils ein Kulturgefäß für Fertigware.

## Claims

1. Method for the cultivation of a plurality of young plants which differ in terms of species or variety to form a group of young plants which can be handled as a unit, **characterized by** the following steps:
- providing a plurality of propagation pots, each containing a substrate, which allow roots that form in a propagation pot to grow out at the sides,
- loading at least one growing container with the plurality of propagation pots in such a manner that the propagation pots arranged in each growing container are in contact with one another in at least a portion of their lateral peripheral surface or are pressed against one another,
- introducing one or more cuttings or seeds of in each case one variety and/or species into each propagation pot, and
- allowing roots to form in the propagation pots of each growing container until roots emerging from the sides of the propagation pots have formed a network of roots which binds the propagation pots in a growing container together as a cluster of propagation pots and holds them together.

2. Method for the cultivation of a plurality of young plants which differ in terms of species or variety to form a group of young plants which can be handled as a unit, **characterized by** the following steps:
- providing a plurality of propagation pots, each containing a substrate, which allow roots that form in a propagation pot to grow out at the sides,
- introducing one or more cuttings or seeds of in each case one variety and/or species into each propagation pot,
- allowing roots to form in the substrate of each propagation pot,
- loading at least one growing container with the plurality of propagation pots in such a manner that the propagation pots arranged in each growing container are in contact with one another in at least a portion of their lateral peripheral surface or are pressed against one another, and
- allowing roots to form in the propagation pots of each growing container until roots emerging from the sides of the propagation pots have formed a network of roots which binds the propagation pots in a growing container together as a cluster of propagation pots and holds them together.

3. Method according to claim 1 or 2,
**characterized in that** the substrate contained in the propagation pots is adapted to the particular variety or species.

4. Method according to claim 3,
**characterized in that** the substrate has a water-retention capacity which is adapted to the particular variety or species.

5. Method according to claim 3 or 4,
**characterized in that** the substrate has a pH value which is adapted to the particular variety or species.

6. Method according to any one of claims 3 to 5,
**characterized in that**, depending on the variety or species present in a propagation pot, the substrate contains a growth regulator.

7. Method according to any one of claims 3 to 6,
**characterized in that**, depending on the variety or species present in a propagation pot, the substrate contains a plant-protection agent, for example a fungicide.

8. Method according to any one of the preceding claims,
**characterized in that** a large number of growing containers is arranged on a cultivation tray.

9. Method according to any one of the preceding claims,
**characterized in that** the propagation pots are selected from a group containing pots made of nonwoven material, Jiffypot^{®} pots and Preforma^{®} pots.

10. Method according to any one of the preceding claims,
**characterized by** the further step of removing the cluster of propagation pots from each growing container and repotting each of the cluster(s) of propagation pots in a cultivation vessel for finished products.

## Revendications

1. Procédé pour assurer la culture de plusieurs jeunes pousses qui diffèrent quant à leur espèce ou leur variété, en un groupe de jeunes pousses pouvant être manipulées en tant qu'unité, **caractérisé par** les étapes suivantes consistant à :
- préparer plusieurs pots de multiplication renfermant chacun un substrat qui permettent aux racines se formant dans un pot de multiplication de croître latéralement à travers la paroi du pot, hors de celui-ci,
- garnir au moins un bac de culture avec lesdits plusieurs pots de multiplication, de façon à ce que les pots de multiplication disposés dans chaque bac de culture soient en contact réciproque sur au moins une partie de leur surface périphérique latérale ou soient pressés mutuellement les uns contre les autres,
- introduire une ou plusieurs boutures ou graines respectivement d'une variété et/ou d'une espèce dans chaque pot de multiplication, et
- laisser pousser des racines dans les pots de multiplication de chaque bac de culture jusqu'à ce que les racines sortant latéralement des pots de multiplication aient formé une tresse d'entrelacement de racines qui relie et maintient les pots de multiplication dans un bac de culture en une grappe de pots de multiplication.

2. Procédé pour assurer la culture de plusieurs jeunes pousses qui diffèrent quant à leur espèce ou leur variété, en un groupe de jeunes pousses pouvant être manipulées en tant qu'unité, **caractérisé par** les étapes suivantes consistant à :
- préparer plusieurs pots de multiplication renfermant chacun un substrat qui permettent aux racines se formant dans un pot de multiplication de croître latéralement à travers la paroi du pot, hors de celui-ci,
- introduire une ou plusieurs boutures ou graines respectivement d'une variété et/ou d'une espèce dans chaque pot de multiplication,
- laisser pousser des racines dans le substrat de chaque pot de multiplication,
- garnir au moins un bac de culture avec lesdits plusieurs pots de multiplication de façon à ce que les pots de multiplication disposés dans chaque bac de culture soient en contact réciproque sur au moins une partie de leur surface périphérique latérale ou soient pressés mutuellement les uns contre les autres, et
- laisser pousser des racines dans les pots de multiplication de chaque bac de culture jusqu'à ce que des racines sortant latéralement des pots de multiplication aient formé une tresse d'entrelacement de racines qui relie et maintient les pots de multiplication dans un bac de culture en une grappe de pots de multiplication.

3. Procédé selon la revendication 1 ou la revendication 2,
**caractérisé en ce que** le substrat contenu dans les pots de multiplication est adapté à la variété ou à l'espèce respectivement considérée.

4. Procédé selon la revendication 3,
**caractérisé en ce que** le substrat possède une capacité de rétention d'eau adaptée à la variété ou à l'espèce respectivement considérée.

5. Procédé selon la revendication 3 ou la revendication 4,
**caractérisé en ce que** le substrat possède une valeur de pH adaptée à la variété ou à l'espèce respectivement considérée.

6. Procédé selon l'une des revendications 3 à 5,
**caractérisé en ce que** le substrat renferme, en fonction de la variété ou de l'espèce se trouvant dans un pot de multiplication, une substance inhibitrice de croissance.

7. Procédé selon l'une des revendications 3 à 6,
**caractérisé en ce que** le substrat renferme, en fonction de la variété ou de l'espèce se trouvant dans un pot de multiplication, un produit phytosanitaire, tel un fongicide.

8. Procédé selon l'une des revendications précédentes,
**caractérisé en ce qu'**une pluralité de bacs de culture sont agencés sur un plateau de culture.

9. Procédé selon l'une des revendications précédentes,
**caractérisé en ce que** les pots de multiplication sont choisis parmi un groupe comprenant des pots en non-tissé, des pots du type Jiffypot^{®} et des pots du type Preforma^{®}.

10. Procédé selon l'une des revendications précédentes,
**caractérisé par** l'étape supplémentaire du prélèvement de la grappe de pots de multiplication de chaque bac de culture, et du rempotage de la grappe ou des grappes de pots de multiplication respectivement dans un conteneur de culture pour produit fini.
